# EUROPÄISCHE PATENTSCHRIFT

(11) **EP 2 128 948 B1**
(45) Veröffentlichungstag und Bekanntmachung des Hinweises auf die Patenterteilung: **04.05.2011**
(21) Anmeldenummer: 08009244.8
(22) Anmeldetag: 20.05.2008
(51) Int. Cl.: H02G 3/06, H02G 3/08

(54) **Installationsteil**
Installation part
Elément d'installation

(43) Veröffentlichungstag der Anmeldung: 02.12.2009
(73) Patentinhaber: Kaiser GmbH & Co. KG, 58579 Schalksmuehle (DE)
(72) Erfinder: Kaiser, Burkard, 58509 Lüdenscheid (DE)
(74) Vertreter: Köchling, Conrad-Joachim

(56) Entgegenhaltungen:
- EP-A- 1 737 094

## Beschreibung

Die Erfindung betrifft ein Installationsteil, insbesondere für elektrotechnische Zwecke, vorzugsweise Installationsdose für die Betonbauinstallation, wobei das Installationsteil an einer Wandung mindestens einen hohlzylindrischen Stutzen aufweist, der zum Einführen eines Installationsrohres, insbesondere eines gewellten Installationsrohres, bestimmt ist und dessen an die Wandung anschließendes Ende durch ein ausschlagbares Wandungsteil verschlossen ist, wobei von dem Wandungsteil eine Ausschlaghülse abragt, die mit ihrem freien Ende aus dem Stutzen vorragt.

Ein derartiges Installationsteil ist beispielsweise aus der EP 1 737 094 A 1 bekannt. Bei der bekannten Ausbildung ist an das ausschlagbare Wandungsteil eine Ausschlaghülse angeformt, die mit ihrem freien Ende aus dem Stutzen vorragt. Durch Hammerschlag auf diese Ausschlaghülse kann das Wandungsteil ausgebrochen werden, um dann entsprechende Installationsrohre oder dergleichen zu positionieren und einführen zu können.

Im Stand der Technik ist ebenfalls eine Ausbildung bekannt, bei der anstelle einer Ausschlaghülse ein Ausschlagkreuz angeformt ist. Die Anformung eines solchen Ausschlagkreuzes ist spritztechnisch nachteilig, weil die Kühlwirkung beim Spritzgießen hinsichtlich der sich kreuzenden Stege ungünstig ist, so dass der Spritzzyklus durch diese Ausbildung nachteilig verzögert wird. Das Anformen einer entsprechenden Ausschlaghülse ist demgegenüber vorteilhaft, weil beim Spritzgießen eine bessere Kühlung und damit eine höhere Spritzgeschwindigkeit erreicht werden kann.

Nachteilig bei der bekannten Ausbildung ist, dass es zu Fehlinstallationen durch den Benutzer kommen kann. Der Benutzer kann nämlich, sofern er die konstruktiven Maßnahmen nicht erkannt hat, auch ein entsprechendes Installationsrohr auf die Ausschlaghülse aufschieben. Hierdurch wird aber das ausschlagbare Wandungsteil nicht entfernt, sondern es verbleibt in dem Installationsteil, so dass die Durchinstallation durch das aufgesteckte Installationsrohr nicht möglich ist.

Ausgehend von diesem Stand der Technik liegt der Erfindung die Aufgabe zugrunde, ein Installationsteil gattungsgemäßer Art zu schaffen, bei dem Fehlinstallationen auszuschließen sind.

Zur Lösung dieser Aufgabe schlägt die Erfindung vor, dass die Ausschlaghülse radial außen mindestens eine Längsrippe, vorzugsweise gegenüberliegend zwei Längsrippen aufweist, wobei die Längsrippe oder die Längsrippen um ein solches Maß radial von der Ausschlaghülse abragen, dass das Aufstecken von üblichen Installationsrohren, insbesondere einer Durchmesserabmessung von 20 mm und 25 mm, auf die Ausschlaghülse verhindert ist.

Durch die Anordnung der entsprechenden Längsrippe oder der entsprechenden Längsrippen, wird erreicht, dass der Benutzer des Installationsteiles nicht irrtümlich auf die Ausschlaghülse ein Installationsrohr aufstecken kann. Dies ist durch die Anordnung der Längsrippen verhindert und ausgeschlossen. Der Benutzer kann nur dann ein Installationsrohr in den Stutzen einführen, wenn die Ausschlaghülse samt darauf befindlichen Längsrippen ausgeschlagen ist und das entsprechende ausschlagbare Wandungsteil des Installationsteiles dadurch entfernt ist.

Durch diese einfache Maßnahme ist also die falsche Installation und der falsche Gebrauch des Installationsteiles verhindert. Zudem wird bei dieser Ausbildung weiterhin sichergestellt, dass beim Spritzgießen entsprechender Installationsteile eine hohe Schussgeschwindigkeit erreicht wird, weil die über die Anschlaghülse radial vorragenden Längsrippen gut und schnell gekühlt werden können, zusammen mit den übrigen Teilen des Installationsteiles, so dass durch die zusätzliche Anordnung der Längsrippen keine nachteilige Beeinflussung des Spritzzyklusses erfolgt.

Bevorzugt ist zudem vorgesehen, dass die Längsrippe oder die Längsrippen von der Mündung der Ausschlaghülse bis zum ausschlagbaren Wandungsteil verlaufen und an dieses angeformt sind.

Durch diese Ausbildung wird erreicht, dass zusätzlich zur Ausschlaghülse die darauf geformten Längsrippen beim Ausschlagen der Ausschlaghülse mittels Hammerschlag ebenfalls auf das ausbrechbare Wandungsteil einwirken, so dass das Ausbrechen des Wandungsteiles noch vereinfacht und verbessert ist.

Um Installationsrohre unterschiedlichen Durchmessers in den Stutzen einbringen zu können und auch an dem Stutzen rastend haltern zu können, ist in an sich bekannter Weise vorgesehen, dass der Stutzen an seiner Wandung nach radial innen vorspringende erste Haltemittel für Installationsrohre mit größerem Durchmesser, insbesondere 25 mm Durchmesser, aufweist und dass am Stutzen im Bereich des ausschlagbaren Wandungsteils zweite Haltemittel für Installationsrohre mit kleinerem Durchmesser, insbesondere 20 mm Durchmesser, angeformt sind, die durch das Ausschlagen des Wandungsteils freilegbar sind.

Dabei kann vorgesehen sein, dass die zweiten Haltemittel über eine Sollbruchstelle mit dem ausschlagbaren Wandungsteil verbunden sind.

Auch kann vorgesehen sein, dass axial zwischen den ersten und zweiten Haltemitteln eine Schulter als erster Einstecktiefenbegrenzungsanschlag für ein Installationsrohr mit größerem Durchmesser ausgebildet ist.

Bei der bisher üblichen Ausbildung solcher Installationsteile, wie dies in der EP 1 737 094 A 1 angegeben ist, besteht die Möglichkeit, dass dann, wenn das entsprechende Wandungsteil ausgebrochen ist und ein im Durchmesser kleines Installationsrohr in den entsprechenden Stutzen eingeschoben wird, dieses zu weit in den Innenraum des Installationsteiles hinein verlagert wird, da in dieser Richtung keine Wegbegrenzungsmittel vorgesehen sind.

Ausgehend von diesem Stand der Technik liegt der Erfindung die weitere Aufgabe zugrunde, ein Installationsteil gattungsgemäßer Art zu schaffen, bei dem der Installateur eine Montagehilfe für die Einstecktiefe eines in den Stutzen einzusteckenden kleineren Installationsrohres erhält.

Zur Lösung dieser Aufgabe wird vorgeschlagen, dass an der Innenwandung des Installationsteiles ein zweiter Einstecktiefenbegrenzungsanschlag für ein im Durchmesser kleineres Installationsrohr ausgebildet ist, gegen den die Mündungsrandkante eines die durch das ausgeschlagene Wandungsteil freigelegte Wandungsöffnung durchgreifenden Installationsrohres angelegt wird.

Durch diese Ausbildung wird sichergestellt, dass dann, wenn das entsprechende Wandungsteil ausgeschlagen ist und somit die Wandungsöffnung freigelegt ist, so dass ein im Durchmesser kleineres Installationsrohr in den Stutzen eingeschoben und durch die Wandung hindurch geschoben werden kann, dieses Installationsrohr nur bis zu einer bestimmten Einstecktiefe eingesteckt werden kann. Sobald nämlich die Stirnseite des Installationsrohres gegen den Einstecktiefenbegrenzungsanschlag anläuft, ist ein weiteres Einschieben des Installationsrohres nicht mehr möglich.

### Fehlinstallationen sind damit vermieden.

Bevorzugt ist dabei vorgesehen, dass der zweite Einstecktiefenbegrenzungsanschlag hakenförmig ausgebildet ist.

Der entsprechende Haken hat einen Schenkel, der an die Wandung des Installationsteils angeformt ist, während das zu einem Haken geformte, quer gerichtete Ende des Einstecktiefenbegrenzungsanschlages den eigentlichen Anschlag für das einzuschiebende Installationsrohr bildet.

Bei der Installation von entsprechenden Installationsrohren, insbesondere Installationsrohren mit größerem Durchmesser, werden diese in den Stutzen des Installationsteiles eingeschoben. Dabei werden diese nur bis zu einem Widerlager innerhalb des Stutzens eingeschoben, so dass die Einschubtiefe relativ gering ist. Die Positionierung wird durch Verrastung oder dergleichen gesichert. Dennoch ist es häufig erforderlich, dass zusätzlich das Installationsrohr mit einem Rödeldraht gehalten wird, der um das Installationsrohr gelegt und in geeigneter Weise mit dem Stutzen oder sonstigen Bestandteilen des Installationsteiles verbunden wird. Bei der herkömmlichen Gestaltung hat der Benutzer keine Hilfestellung und kein Widerlager für die Anordnung des Rödeldrahtes.

Hiervon ausgehend liegt der Erfindung die weitere Aufgabe zugrunde, ein Installationsteil gattungsgemäßer Art zu schaffen, bei dem eine Montagehilfe für den Benutzer gebildet ist, um einen Rödeldraht zu positionieren und zu fixieren.

Zur Lösung dieser Aufgabe schlägt die Erfindung vor, dass der Stutzen radial außen einen Rödelvorsprung aufweist, der ein Widerlager für einen Rödeldraht bildet, der um ein in den Stutzen eingestecktes Installationsrohr gelegt ist.

Durch diese Anordnung wird für den Benutzer eine Installationshilfe gebildet, damit ein entsprechender Rödeldraht lagerichtig positioniert und fixiert werden kann.

Vorzugsweise ist dabei vorgesehen, dass der Rödelvorsprung Bestandteil einer Längsrippe ist, die außen auf den Stutzen aufgeformt ist.

Besonders bevorzugt ist dabei vorgesehen, dass der Rödelvorsprung axial über die Mündung des Stutzens vorragt.

Dadurch, dass der Rödelvorsprung axial über die Mündung des Stutzens vorragt, ist in unmittelbarer Nähe des Endes des Stutzens eine Hilfe und ein Widerlager für die Anordnung eines Rödeldrahtes gebildet, so dass dieser mündungsnah um das entsprechende, in den Stutzen eingesteckte Installationsrohr gelegt und über den axial vorstehenden Rödelvorsprung geführt werden kann, um die gewünschte Anordnung und Halterung des Rödeldrahtes zu erreichen.

Bei herkömmlichen Installationsteilen, insbesondere bei Installationsdosen für die Betonbauinstallation besteht die Gefahr, dass dann, wenn diese Installationsdosen an der Schalung befestigt sind und Armierungseisen verlegt werden, dass die Stutzen, die von der Installationsdose abragen, beschädigt oder abgebrochen werden.

Um diese Gefahr zu vermindern, schlägt die Erfindung vor, dass zumindest der oder die mündungsnah an dem Installationsteil vorgesehene Stutzen an seiner beziehungsweise ihrer der Mündung zugewandten Seite eine Rippe aufweist beziehungsweise aufweisen, die den Stutzen axial überragt und am Mantel des Stutzens sowie an der Wandung angeformt ist.

Bevorzugt ist dabei vorgesehen, dass das freie Ende der Rippe den Rödelvorsprung aufweist oder bildet.

Durch die Ausbildung der zusätzlichen Rippe wird erreicht, dass beim Aufbringen von Armierungseisen und dergleichen, die den entsprechenden Stutzen treffen könnten, die Rippe die Beschädigung des Stutzens oder das Abbrechen des Stutzens verhindert, so dass der Stutzen durch die Anordnung der Rippe gegen die entsprechende mechanische Beeinträchtigung geschützt ist.

Ausführungsbeispiele der Erfindung sind in Zeichnung dargestellt und im Folgenden näher beschrieben.

Es zeigt:
- Figur 1: ein Installationsteil in Ansicht;
- Figur 2: ein Detail des Installationsteiles in Ansicht, teilweise geschnitten,
- Figur 3: einen Teilbereich des Installationsteiles in Ansicht;
- Figur 4: einen Teilbereich des Installationsteiles im Schnitt gesehen;
- Figur 5: einen Teilbereich des Installationsteiles wiederum im Schnitt gesehen.

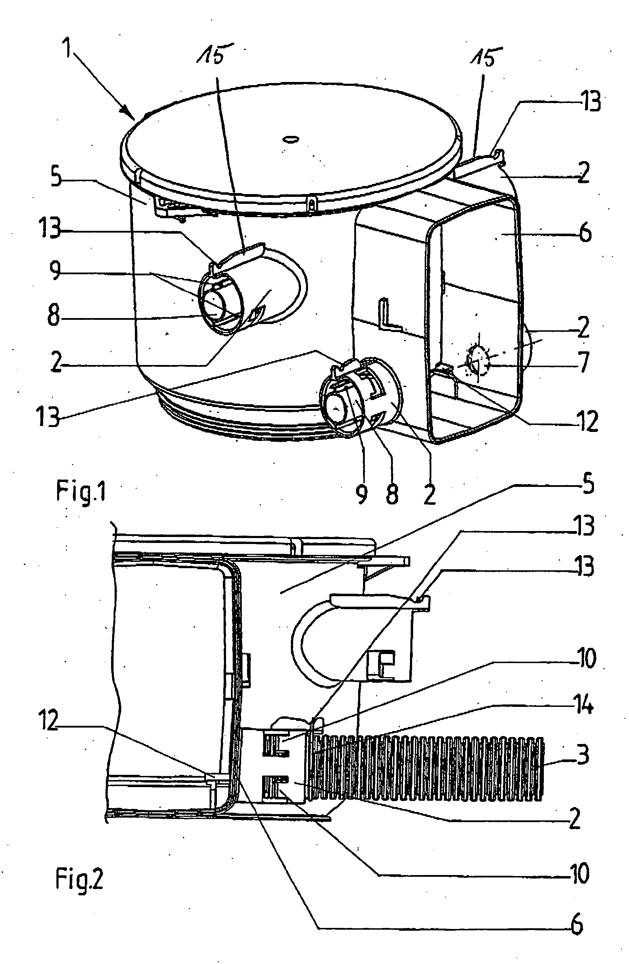

In der Figur 1 ist ein Installationsteil 1 gezeigt, welches insbesondere bei der Betonbauinstallation Verwendung findet. Dieses Installationsteil 1 weist an mehreren Wandungsbereichen hohle zylindrische Stutzen 2 auf, die zum Einführen von Installationsrohren 3,4 geeignet und bestimmt sind. Wie aus der Zeichnung ersichtlich, handelt es sich dabei um vorzugsweise gewellte Installationsrohre, wobei ein erstes Installationsrohr 3, beispielsweise einen Außendurchmesser von 25 mm und ein zweites Installationsrohr 4 einen Außendurchmesser von 20 mm aufweisen kann.

Ebenfalls sind die Stutzen 2 dazu bestimmt, Installationsrohre unterschiedlicher Durchmesser aufzunehmen. Um zu vermeiden, dass durch die Stutzen 2, wenn keine Installationsrohre 3, 4 installiert sind, Betonmaterial oder dergleichen in das Innere des Installationsteiles eindringen kann, ist das an die Wandung 5, 6 des Installationsteiles anschließende Ende des Stutzens 2 jeweils durch ein ausschlagbares Wandungsteil verschlossen, welches bei 7 angedeutet ist. Um bei einer entsprechenden Installation dieses ausschlagbare Wandungsteil entfernen zu können, ragt von dem Wandungsteil eine Ausschlaghülse 8 ab, die mit ihrem freien Ende aus dem Stutzen 2 vorragt. Sofern die entsprechende Öffnung freigelegt werden soll, also das Wandungsteil (bei 7) entfernt werden soll, so genügt es, mit einem Hammer auf die Stirnseite der Ausschlaghülse zu schlagen.

Hierdurch wird das Wandungsteil (7) ausgebrochen und ist samt Ausschlaghülse 8 entfernbar.

Um zu vermeiden, dass eine Fehlinstallation erfolgt, indem der Benutzer irrtümlich annimmt, er könne ein Installationsrohr 3,4 auf die Ausschlaghülse 8 aufschieben, weist die Ausschlaghülse 8 radial außen gegenüberliegend Längsrippen 9 auf. Die Längsrippen 9 ragen um ein solches Maß vom Mantel der Ausschlaghülse 8 ab, dass das Aufstecken von üblichen Installationsrohren, beispielsweise einer Durchmesserabmessung von 20 mm oder 25 mm, auf die Ausschlaghülse 8 verhindert ist. Es ist somit sichergestellt, dass keine Fehlinstallationen erfolgen können.

Vorzugsweise verlaufen die Längsrippen 9 von der Mündung der Ausschlaghülse 8 über deren gesamte äußere Mantelfläche bis zum ausschlagbaren Wandungsteil (bei 7) und sind an dieses angeformt. Hierdurch dienen die Längsrippen 9 noch zusätzlich zur Hilfestellung beim Ausschlagen des ausschlagbaren Wandungsteils 7.

Zusätzlich weist der Stutzen 2 an seiner Wandung nach radial innen vorspringende erste Haltemittel 10 für Installationsrohre 3 mit größerem Durchmesser, insbesondere 25 mm Durchmesser, auf. Zusätzlich sind am Stutzen 2 im Bereich des ausschlagbaren Wandungsteils 7 zweite Haltemittel 11 für Installationsrohre 4 mit kleinerem Durchmesser, insbesondere 20 mm Durchmesser, angeformt, die durch das Ausschlagen des Wandungsteils (7) freilegbar sind. Das ausbrechbare Wandungsteil 7 weist entsprechende Ausbruchskonturen (Sollbruchstellen) auf, so dass es von dem entsprechendem Wandungsteil 5, 6 des Installationsteiles getrennt werden kann, wobei die zweiten Haltemittel 11 aber nicht mit abgebrochen werden, sondern als Bestandteil der Wandung 5 beziehungsweise 6 verbleiben. Diese zweiten Haltemittel 11 sind radiale Vorsprünge, die mit dem vorzugsweise gewellten Mantel des Installationsrohres 4 zusammenwirken und an diesem verrasten, um eine Positionssicherung zu erreichen und insbesondere eine Auszugsicherung zu bilden.

Axial zwischen den ersten Haltemitteln 10 und den zweiten Haltemitteln 11 kann zusätzlich eine Schulter als erster Einstecktiefenbegrenzungsanschlag für ein Installationsrohr 3 mit größerem Durchmesser ausgebildet sein, so dass dieses in den Stutzen 2 nur bis zu einer bestimmten Tiefe einsteckbar ist, wobei die ersten Haltemittel dann in den Rillen am Mantel des Installationsrohres 3 verrasten.

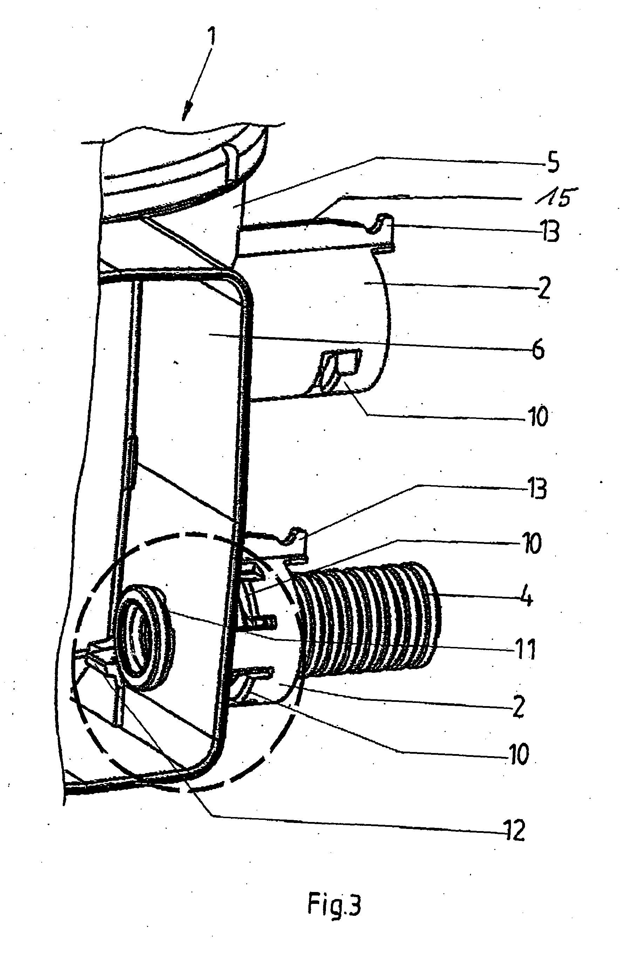

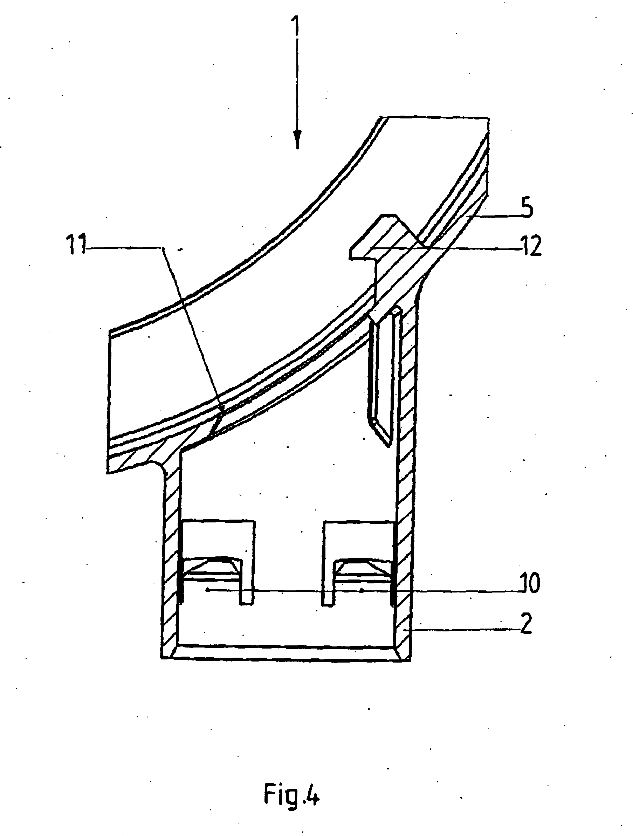

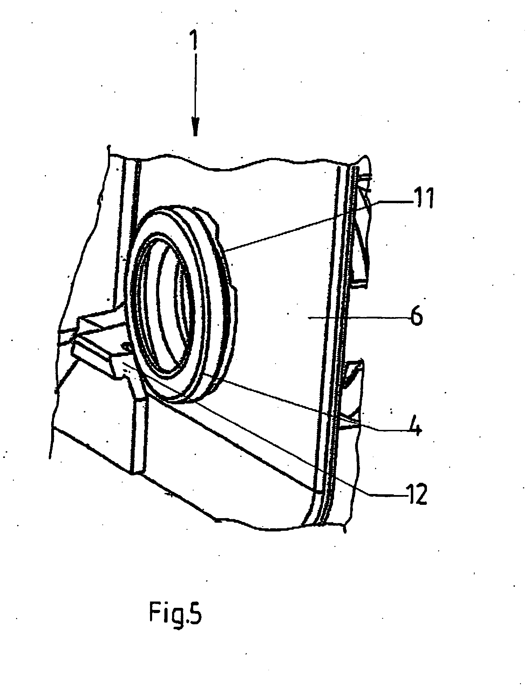

An der Innenwandung des Installationsteiles 1 sind zusätzlich zweite Einstecktiefenbegrenzungsanschläge 12 für ein Installationsrohr 4 mit kleinerem Durchmesser ausgebildet. Wie insbesondere aus Figur 3 und 5 ersichtlich, wird das im Durchmesser kleinere Installationsrohr 4 in den entsprechenden Stutzen 2 eingeschoben, bis dessen freies Ende an dem zweiten Einstecktiefenbegrenzungsanschlag 12 anliegt. Es wird hierdurch verhindert, dass das Installationsrohr 4 zu tief in das Installationsteil 1 eingeschoben werden kann. Wie insbesondere aus Figur 4 ersichtlich, ist der zweite Einstecktiefenbegrenzungsanschlag 12 hakenförmig ausgebildet, wobei ein Schenkel des Hakens parallel zur Einsteckrichtung des Rohres 4 verläuft und das Ende des Einstecktiefenbegrenzungsanschlages rechtwinklig abgewinkelt dazu verläuft, so dass er eine Anschlagkante für die Stirnseite des eingesteckten Rohres 4 bildet.

Zusätzlich weist der Stutzen 2 radial außen einen Rödelvorsprung 13 auf, wie insbesondere in den Figuren 1 bis 3 ersichtlich ist. Dieser Rödelvorsprung 13 bildet ein Widerlager für einen Rödeldraht 14, der um ein in den Stutzen 2 eingestecktes Installationsrohr 3 gelegt ist, wie in Figur 2 veranschaulicht ist. Der Rödelvorsprung 13 ist dabei Bestandteil einer Längsrippe, die außen auf den Stutzen 2 aufgeformt ist. Um den Rödelvorsprung 13 für den Rödeldraht 14 gut zugänglich zu machen, ragt der Rödelvorsprung 13 axial über die Mündung des Stutzens 2 vor.

Es ist damit eine Montagehilfe für den Benutzer gebildet, sofern er, wie in Figur 2 veranschaulicht ist, einen Rödeldraht 14 um das Installationsrohr 3 legen und mit dem Stutzen 2 verbinden will.

Wie insbesondere aus Figur 1 bis 3 ersichtlich, weisen die mündungsnah, also in der Zeichnung oben an der am Installationsteil 1 vorgesehenen Stutzen 2 an ihrer dieser oberen Seite zugewandten Seite eine Rippe 15 auf, die den Stutzen axial überragt und am Mantel des Stutzens 2 sowie an der Wandung 5 angeformt ist. Hierdurch wird der Stutzen 2 gegen mechanische Einwirkungen geschützt, die dadurch auftreten können, dass Armierungseisen aufgebracht werden, die möglicherweise den Stutzen 2 treffen können. Durch die Rippen 15 wird eine Beschädigung des Stutzens 2 vermieden. Insbesondere kann dabei vorgesehen sein, dass das Ende der Rippe 15 den Rödelvorsprung 13 aufweist oder bildet.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Installationsteil (1), insbesondere für elektrotechnische Zwecke, vorzugsweise Installationsdose für die Betonbauinstallation, wobei das Installationsteil (1) an einer Wandung (5,6) mindestens einen hohlzylindrischen Stutzen (2) aufweist, der zum Einführen eines Installationsrohres (3,4), insbesondere eines gewellten Installationsrohres, bestimmt ist und dessen an die Wandung (5,6) anschließendes Ende durch ein ausschlagbare Wandungsteil (7) verschlossen ist, wobei von dem Wandungsteil (7) eine Ausschlaghülse (8) abragt, die mit ihrem freien Ende aus dem Stutzen (2) vorragt, **dadurch gekennzeichnet, dass** die Ausschlaghülse (8) radial außen mindestens eine Längsrippe (9), vorzugsweise gegenüberliegend zwei Längsrippen (9) aufweist, wobei die Längsrippe (9) oder die Längsrippen (9) um ein solches Maß radial von der Anschlaghülse (8) abragen, dass das Aufstecken von üblichen Installationsrohren (3,4), insbesondere einer Durchmesserabmessung von 20 mm und 25 mm, auf die Ausschlaghülse (8) verhindert ist.

2. Installationsteil nach Anspruch 1, **dadurch gekennzeichnet, dass** die Längsrippe (9) oder die Längsrippen (9) von der Mündung der Ausschlaghülse (8) bis zum ausschlagbaren Wandungsteil (7) verlaufen und an dieses angeformt sind.

3. Installationsteil nach Anspruch 1 oder 2, **dadurch gekennzeichnet, dass** der Stutzen (2) an seiner Wandung nach radial innen vorspringende erste Haltemittel (10) für Installationsrohre (3) mit größerem Durchmesser, insbesondere 25 mm Durchmesser, aufweist und dass am Stutzen (2) im Bereich des ausschlagbaren Wandungsteils (7) zweite Haltemittel (11) für Installationsrohre (4) mit kleinerem Durchmesser, insbesondere 20 mm Durchmesser, angeformt sind, die durch das Ausschlagen des Wandungsteils (7) freilegbar sind.

4. Installationsteil nach Anspruch 3, **dadurch gekennzeichnet, dass** die zweiten Haltemittel (11) über eine Sollbruchstelle mit dem ausschlagbaren Wandungsteil (7) verbunden sind.

5. Installationsteil nach Anspruch 3 oder 4, **dadurch gekennzeichnet, dass** axial zwischen den ersten und zweiten Haltemitteln (10,11) eine Schulter als erster Einstecktiefenbegrenzungsanschlag für ein Installationsrohr (3) mit größerem Durchmesser ausgebildet ist.

6. Installationsteil nach dem Oberbegriff des Anspruches 1, insbesondere nach einem der Ansprüche 3 bis 5, **dadurch gekennzeichnet, dass** an der Innenwandung des Installationsteiles (1) ein zweiter Einstecktiefenbegrenzungsanschlag (12) für ein im Durchmesser kleineres Installationsrohr (4) ausgebildet ist, gegen den die Mündungsrandkante eines die durch das ausgeschlagene Wandungsteil (7) freigelegte Wandungsöffnung durchgreifenden Installationsrohres (4) angelegt wird.

7. Installationsteil nach Anspruch 6, **dadurch gekennzeichnet, dass** der zweite Einstecktiefenbegrenzungsanschlag (12) hakenförmig ausgebildet ist.

8. Installationsteil nach dem Oberbegriff des Anspruches 1, insbesondere nach einem der Ansprüche 1 bis 7, **dadurch gekennzeichnet, dass** der Stutzen (2) radial außen einen Rödelvorsprung (13) aufweist, der ein Widerlager für einen Rödeldraht (14) bildet, der um ein in den Stutzen (2) eingestecktes Installationsrohr (3,4) gelegt ist.

9. Installationsteil nach Anspruch 8, **dadurch gekennzeichnet, dass** der Rödelvorsprung (13) Bestandteil einer Längsrippe ist, die außen auf den Stutzen (2) aufgeformt ist.

10. Installationsteil nach Anspruch 8 oder 9, **dadurch gekennzeichnet, dass** der Rödelvorsprung (13) axial über die Mündung des Stutzens (2) vorragt.

11. Installationsteil nach dem Oberbegriff des Anspruches 1, insbesondere nach einem der Ansprüche 1 bis 10, **dadurch gekennzeichnet, dass** zumindest der oder die mündungsnah an dem Installationsteil (1) vorgesehene Stutzen (2) an seiner beziehungsweise ihrer der Mündung zugewandten Seite eine Rippe (15) aufweist beziehungsweise aufweisen, die den Stutzen (2) axial überragt und am Mantel des Stutzens (2) sowie an der Wandung (5) angeformt ist.

12. Installationsteil nach Anspruch 11, **dadurch gekennzeichnet, dass** das freie Ende der Rippe (15) den Rödelvorsprung (13) aufweist oder bildet.

## Claims

1. An installation part (1), in particular for electrotechnical purposes, preferably an installation box for installation in concrete construction, wherein the installation part (1) is provided on a wall (5, 6) with at least one hollow cylindrical connection piece (2) which is intended for the insertion of an installation tube (3, 4), preferably a corrugated installation tube, and the end of which adjoining the wall (5, 6) is closed by a fold-out wall part (7), wherein a fold-out sleeve (8), which projects with the free end thereof from the connection piece (2), projects from the wall part (7), **characterized in that** the fold-out sleeve (8) has radially on the outside at least one longitudinal rib (9), preferably two longitudinal ribs (9) opposite each other, wherein the longitudinal rib (9) or the longitudinal ribs (9) projects or project radially from the fold-out sleeve (8) to such an extent as to prevent customary installation tubes (3, 4), in particular with a diameter of 20 mm and 25 mm, from being attached to the fold-out sleeve (8).

2. An installation part according to claim 1, **characterized in that** the longitudinal rib (9) or the longitudinal ribs (9) extends or extend from the opening of the fold-out sleeve (8) as far as the fold-out wall part (7) and is or are integrally moulded thereon.

3. An installation part according to claim 1 or 2, **characterized in that** the connection piece (2) has on its wall first holding means (10) projecting radially
inwards for installation tubes (3) of greater diameter, in particular 25 mm diameter, and second holding means (11) for installation tubes (4) of smaller diameter, in particular 20 mm diameter, which are capable of being uncovered by the folding out of the wall part (7), are integrally formed on the connection piece (2) in the region of the fold-out wall part (7).

4. An installation part according to claim 3, **characterized in that** the second holding means (11) are connected by way of a nominal breaking point to the fold-out wall part (7).

5. An installation part according to claim 3 or 4, **characterized in that** a shoulder is formed axially between the first and second holding means (10, 11) as a first stop limiting the insertion depth for an installation tube (3) of greater diameter.

6. An installation part according to the preamble of claim 1, in particular according to any one of claims 3 to 5, **characterized in that** on the inner wall of the installation part (1) a second stop (12) limiting the insertion depth is formed for an installation tube (4) of smaller diameter, against which stop (12) the opening edge of an installation tube (4) engaging through the wall opening uncovered by the folded-out wall part (7) is set.

7. An installation part according to claim 6, **characterized in that** the second stop (12) limiting the insertion depth is formed in the shape of a hook.

8. An installation part according to the preamble of claim 1, in particular according to any one of claims 1 to 7, **characterized in that** the connection piece (2) has radially on the outside a mesh projection (13) which forms an abutment for a wire mesh (14) which is laid around an installation tube (3, 4) inserted into the connection piece (2).

9. An installation part according to claim 8, **characterized in that** the mesh projection (13) is a component part of a longitudinal rib which is formed on the outside of the connection piece (2).

10. An installation part according to claim 8 or 9, **characterized in that** the mesh projection (13) projects axially beyond the opening of the connection piece (2).

11. An installation part according to the preamble of claim 1, in particular according to any one of claims 1 to 10, **characterized in that** at least the connection piece (2) or the connection pieces (2) provided on the installation part (1) close to the opening has or have on the side thereof facing the opening a rib (15) which projects axially beyond the connection piece (2) and which is formed integrally on the outside of the connection piece (2) and on the wall (5).

12. An installation part according to claim 11, **characterized in that** the free end of the rib (15) has or forms the mesh projection (13).

## Revendications

1. Elément d'installation (1) notamment destiné à des applications électrotechniques et revêtant, de préférence, la forme d'une prise d'installation pour ouvrages bétonnés, ledit élément d'installation (1) comportant, sur une paroi (5, 6), au moins un embout (2) de forme cylindrique creuse destiné à l'insertion d'un tube d'installation (3, 4), en particulier un tube d'installation annelé, et dont l'extrémité se rattachant à ladite paroi (5, 6) est obturée par une partie de cloisonnement (7) enfonçable, sachant qu'une douille de défonçage (8), dépassant de ladite partie de cloisonnement (7), fait saillie au-delà de l'embout (2) par son extrémité libre, **caractérisé par le fait que** la douille de défonçage (8) offre extérieurement, dans le sens radial, au moins une nervure longitudinale (9) et, de préférence, deux nervures longitudinales (9) opposées l'une à l'autre, ladite nervure longitudinale (9) ou lesdites nervures longitudinales (9) dépassant radialement, au-delà de la douille de défonçage (8), d'une cote propre à empêcher l'emboîtement, sur ladite douille de défonçage (8), de tubes d'installation (3, 4) conventionnels présentant, en particulier, un dimensionnement diamétral de 20 mm et 25 mm.

2. Elément d'installation selon la revendication 1, **caractérisé par le fait que** la nervure longitudinale (9) ou les nervures longitudinales (9) s'étend(ent) depuis l'embouchure de la douille de défonçage (8) jusqu'à la partie de cloisonnement (7) enfonçable, et fait (font) corps avec ladite partie.

3. Elément d'installation selon la revendication 1 ou 2, **caractérisé par le fait que** l'embout (2) comporte, sur sa paroi, des premiers moyens de retenue (10) en saillie radiale vers l'intérieur, dévolus à des tubes d'installation (3) de fort diamètre, notamment d'un diamètre de 25 mm ; et **par le fait que** des seconds moyens de retenue (11) dévolus à des tubes d'installation (4) de plus faible diamètre, notamment d'un diamètre de 20 mm, font corps avec ledit embout (2) dans la région de la partie de cloisonnement (7) enfonçable, et peuvent être libérés par le défonçage de ladite partie de cloisonnement (7).

4. Elément d'installation selon la revendication 3, **caractérisé par le fait que** les seconds moyens de retenue (11) sont reliés à la partie enfonçable de cloisonnement (7) par l'intermédiaire d'une zone de rupture par destination.

5. Elément d'installation selon la revendication 3 ou 4, **caractérisé par le fait qu'**un épaulement est ménagé axialement, entre les premiers et seconds moyens de retenue (10, 11), en tant que première butée de limitation de la profondeur d'emboîtement d'un tube d'installation (3) de fort diamètre.

6. Elément d'installation conforme au préambule de la revendication 1, notamment selon l'une des revendications 3 à 5, **caractérisé par le fait qu'**une seconde butée (12) de limitation de la profondeur d'emboîtement d'un tube d'installation (4) de plus faible diamètre est ménagée sur la paroi intérieure dudit élément d'installation (1), l'arête marginale de l'embouchure d'un tube d'installation (4), traversant l'orifice de paroi dégagé par la partie de cloisonnement (7) enfoncée, étant mise en applique contre ladite butée.

7. Elément d'installation selon la revendication 6, **caractérisé par le fait que** la seconde butée (12) de limitation de la profondeur d'emboîtement est réalisée en forme de crochet.

8. Elément d'installation conforme au préambule de la revendication 1, notamment selon l'une des revendications 1 à 7, **caractérisé par le fait que** l'embout (2) est extérieurement muni, dans le sens radial, d'une protubérance de rattachement (13) formant une contre-butée dédiée à un fil métallique d'attache (14) placé autour d'un tube d'installation (3, 4) emboîté dans ledit embout (2).

9. Elément d'installation selon la revendication 8, **caractérisé par le fait que** la protubérance de rattachement (13) fait partie intégrante d'une moulure longitudinale ménagée extérieurement sur l'embout (2).

10. Elément d'installation selon la revendication 8 ou 9, **caractérisé par le fait que** la protubérance de rattachement (13) fait saillie, dans le sens axial, au-delà de l'embouchure de l'embout (2).

11. Elément d'installation conforme au préambule de la revendication 1, notamment selon l'une des revendications 1 à 10, **caractérisé par le fait qu'**au moins l'embout ou les embouts (2) prévu(s) sur ledit élément d'installation (1), à proximité de l'embouchure, est (sont) respectivement doté(s), sur son (leurs) côté(s) tourné(s) vers ladite embouchure, d'une moulure (15) qui fait axialement saillie au-delà de l'embout (2) et fait corps avec l'enveloppe dudit embout (2), ainsi qu'avec la paroi (5).

12. Elément d'installation selon la revendication 11, **caractérisé par le fait que** l'extrémité libre de la moulure (15) comporte la protubérance de rattachement (13), ou forme cette dernière.
